# EUROPEAN PATENT SPECIFICATION

(11) **EP 1 427 497 B1**
(45) Date of publication and mention of the grant of the patent: **17.02.2010**
(21) Application number: 02755322.1
(22) Date of filing: 06.09.2002
(51) Int. Cl.: A63G 13/06

(54) **RESILIENT ELASTOMERIC STRUCTURE**
NACHGIEBIGE ELASTOMERESTRUKTUR
STRUCTURE ELASTOMERE ELASTIQUE

(30) Priority: 07.09.2001 GB 0121655
(43) Date of publication of application: 16.06.2004
(73) Proprietor: Henderson, Timothy David Robert, Ruthin Denbighshire LL15 2SL (GB)
(72) Inventor: Henderson, Timothy David Robert, Ruthin Denbighshire LL15 2SL (GB)
(74) Representative: Hamilton, Alistair
(86) International application number: PCT/GB2002/004050
(87) International publication number: WO 2003/022383

(56) References cited:
- EP-A- 0 885 757
- GB-A- 856 318
- US-A- 4 027 843
- US-A- 4 516 766

## Description

This invention relates to a resilient elastomeric structure for use in an amusement ride.

In children's playgrounds, it is common to find rides that take the form of a ride body upon which a child can sit, the ride body being connected through a helical spring to a plate secured on the ground. This means that a child can sit upon the body and bounce or rock, causing the spring to flex. The resilient nature of the spring is such that it tends always to urge the ride body back to a neutral, upright position. To add interest to the ride, the ride body is typically shaped to resemble an animal, a motorcycle, or some other shape intended to please a child.

These rides are popular with children, and are very safe, there being no instances known to the applicant of a child being harmed when playing on them, other than in the type of minor falls that will happen inevitably. However, the presence of a strong steel spring can give the ride an "engineered" appearance and the impression, even if incorrect, that the spring could injure a child, perhaps by trapping a hand or foot.

It has been proposed in US-A-5 415 590 to replace the spring in such a ride with a dome-shaped construction of natural and neoprene rubber, into which is moulded a steel support post, the body of the ride being carried on the support post. While such a ride may perform well when it is first manufactured, experience has shown that rubber will, over time, become brittle when exposed to the weather. When this happens, it looses its elastomeric properties, and may eventually become brittle. It is also possible that the supporting post will become loose or may even detach, this being highly undesirable and risky for a child using the ride.

US-A-4 516 766 discloses a playground ride in which a ride body is connected to an elastomeric support by a rigid intermediate member.

US-A-4 027 843 discloses a rocking chair that porvides complex rocking motion by virtue of a volume-compressible foam body snadwiched between substantially rigid upper and lower sections.

An aim of this invention is to provide a replacement for the spring in a playground ride or other amusement apparatus that does not suffer from the disadvantages of the known apparatuses.

From a first aspect, this invention provides a resilient elastomeric support structure according to claim 1.

It has been found that polyurethane exhibits particularly advantageous elastomeric properties while having greater durability and predictability of properties than can be obtained from rubber. These can be further enhanced by addition of an ultraviolet stabilising formulation. The resilient properties of polyurethane are exploited for some applications, such as bushes for use in vehicle suspension systems, where the main mode of deflection of the material is torsional. However, it has not recognised as being generally applicable in circumstances in which an elastomer is required. In particular, its use as a bulk material to be loaded as a strut, with a mode of deflection in compression and in flexion is not usual.

In preferred embodiments, the elastomeric body may be formed as a one-piece moulding.

A connection formation of preferred embodiments of the invention may include a securing region, such as a flange formed in the elastomeric body. The securing region typically includes one or more securing formations that can interact with fasteners to secure the elastomeric structure to a supporting foundation or to a ride body, as the case may be.

It has been found that the resilient properties of polyurethane can present difficulties when a body of it is to be secured, for example by means of bolts. The material can deform to such an extent that the head of the bolt can be pulled through a hole made for the shaft of the bolt, in many cases, without causing any damage to the structure of the body. As claimed in claim 1, the securing region is disposed such that material of the elastomeric body is held substantially in compression by a fastener.This can help to resist undesirable distortion or tearing of the elastomeric material. Additionally, in preferred embodiments of this invention, the elastomeric structure includes a respective reinforcement member provided as part of each connection formation. For example, a reinforcement member may include an annular element, typically of metal, that lies on or adjacent to a flange that is formed integrally with the elastomeric body, and which, in use, can hold the flange in compression. For example, the annular element may be placed upon the flange or moulded within it.

The elastomeric body may advantageously be covered with a defensive cover to protect it against damage or attack. A cover of chain mail has been found to be highly effective yet sufficiently flexible to move with the elastomeric body.

In embodiments of the invention, the elastomeric body may be formed integrally with a ride body. For example, the elastomeric body and the ride body may be formed as a single moulding.

From a second aspect, this invention provides an amusement ride comprising a ride body and one or more elastomeric structures, each embodying the first aspect of the invention, upon which the ride body can be supported.

A first, and most usual type of amusement ride has a body that is supported on a single support structure such that it can rock laterally and/or bounce vertically (so-called "rock and ride"). Such a ride is most normally configured such that a rider or riders can sit upon the ride body.

Alternatively, the ride body can be supported upon two spaced supporting members. This can allow a designer to control the axes about which the body can rock. In one configuration of such an embodiment, the ride body may be configured to allow one or more riders to stand upon it.

In embodiments of this aspect of the invention, the ride body and the elastomeric body may conveniently be formed as a single moulding of polyurethane. This avoids the need to make and connect separate components for the elastomeric body and the ride body. Regions of the ride body with which a rider makes direct contact may be integrally skin foamed. This provides a soft, spongy and grippy surface in the foamed region. The foamed regions can be formed in one moulding with non-foamed regions, yet their surface appearance is similar to that of the regions that are not foamed. Alternatively, the elastomeric body can be formed from several mouldings interconnected, for example, by adhesives. It has been found that the mouldings can be interconnected by cyanoacrylate adhesive (particularly suitable in regions of comparatively low flexure) or by solvent welding, which allows for greater flexibility in the region of the joint.

An amusement ride may have components formed as additional mouldings or rigid or flexible material. These may be co-moulded with the polyurethane moulding of the ride body. This has the effect of covering the additional components with a coating of polyurethane. Components of other materials can also be provided. For example, the ride body may be provided with components of metal. Such components can also be co-moulded with the polyurethane ride body so that they appear to be integral with the ride body. It may be particularly advantageous to foam the polyurethane in the region of the additional components to cushion and protect them.

There is almost an unlimited range of shapes that can be selected by a designer for the ride body. These will typically be selected as to appeal to children of an age by which the ride is intended to be used. For example, they may include representations of animals, birds, plants, machinery such as cars or rockets, amongst many other possibilities. These designs may be anthropomorphised, for example by the addition of features that resemble facial features.

In the drawings:
Figure 1 shows an amusement ride being a first embodiment of the invention;

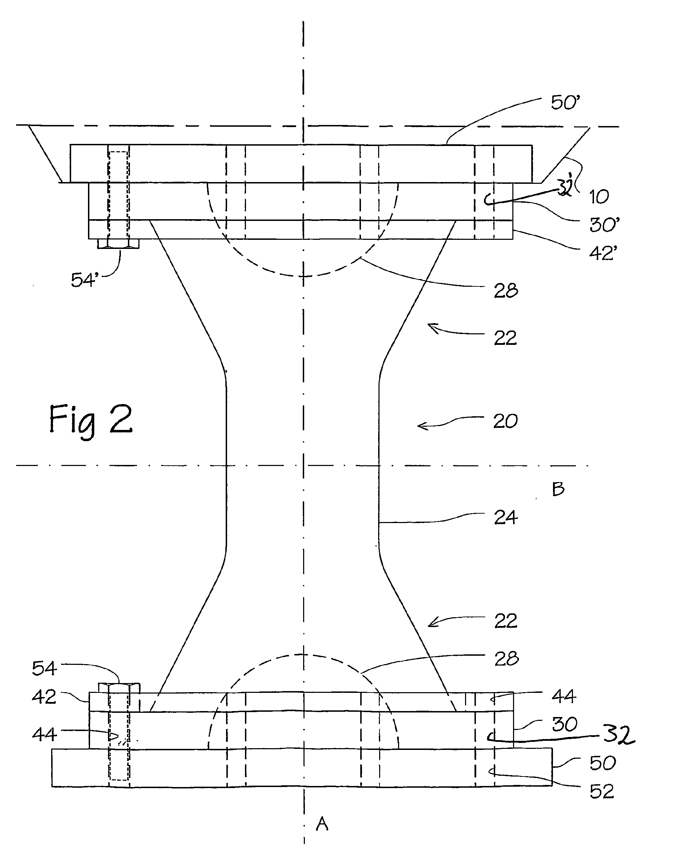

Figure 2 shows an elastomeric structure for use in the embodiment of Figure 1;
Figures 3 to 8 respectively show rides being second to seventh embodiments of the invention;
Figure 9 shows the embodiment of Figure 7 in use;
Figure 10 is a sectional view of an embodiment of the invention showing means by which it may be fixed upon a supporting surface; and
Figure 11 shows an alternative fixing arrangement of the embodiment of Figure 1.

Embodiments of the invention will now be described in detail, by way of example, and with reference to the accompanying drawings.

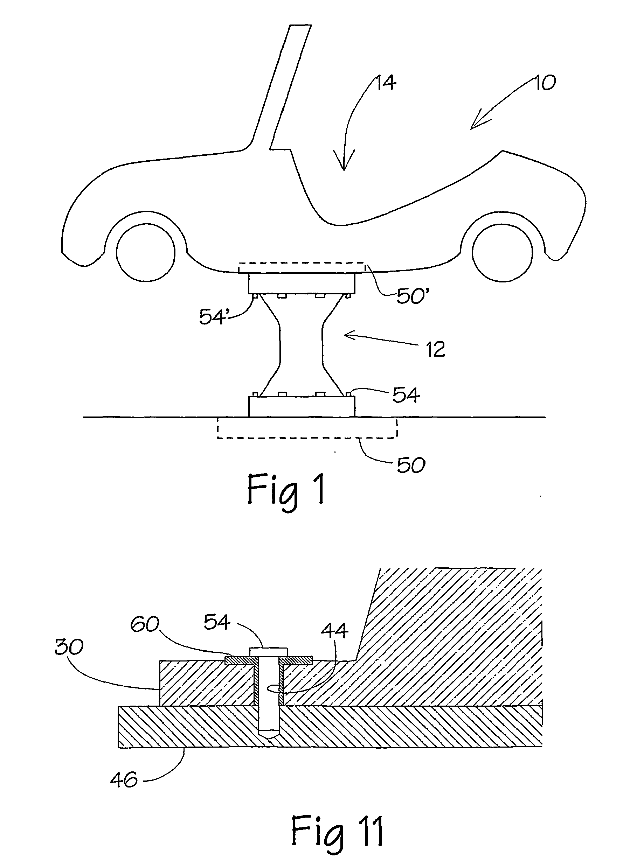

With reference first to Figure 1, an amusement ride embodying the second aspect of the invention comprises a ride body 10, and a support structure 12.

The ride body 10 is formed as a moulding of hard plastic, shaped, in this embodiment, to resemble a motorcycle. The body 10 has a seat portion 14 upon which an individual (typically, a child) can sit. (Alternative embodiments may have space to carry more than one person.) The ride body can be substantially conventional in construction. Indeed, it may be a ride body primarily intended for use with a conventional steel coil spring support, in this embodiment, used instead with an elastomeric support in accordance with the invention.

The support structure 12 is in constructed as an embodiment of the first aspect of the invention. The support structure comprises an elastomeric body 20 that is formed as a one-piece moulding of polyurethane to which an ultraviolet stabilising formation has been added. The elastomeric body is rotationally symmetrical about an axis A that is vertical in normal use, and symmetrical about a middle plane B that is normal to the axis A.

The elastomeric body has upper and lower regions 22 that are mirror images of one another, disposed about the middle plane B. A generally cylindrical trunk portion 24 interconnects the upper and lower regions 22; the trunk portion 24 being coaxial with the axis A, and having an axial bore 26. The upper and lower regions 22 are of diameter greater than that of the trunk portion, and extend form it in a bell-like shape. Within each of the upper and lower end regions 22 a void 28 is formed, the size and shape of which is selected to confer required elastic properties upon the end region, and to reduce the amount of material required to mould the elastomeric body 20.

The axial bore 26 serves to control the elastomeric properties of the elastomeric body 20. Increasing the diameter of the bore increases the flexibility of the body. Moreover, the bore 26 need not be of circular cross-section; that is to say, it may be of non-constant diameter. In this case, the flexibility of the body can be controlled such that its flexibility is different in different directions. The bore 26 may be omitted altogether to maximise the stiffness of the body 20.

In an alternative configuration, a tension element, such as a metal tube or a bolt, can pass through the bore to connect upper and lower regions of the support structure. This can limit movement of the support structure and/or strengthen it. Such a tension element will normally be mounted at its lower end to permit some pivotal movement.

Note also that the elastomeric body need not be of circular diameter. Again, this can be used to control the stiffness of the elastomeric body in different directions.

Each of the end regions 22 carries a flange 30 extending around its periphery, and projecting radially. The flange 30 of the lower and upper end regions is part, respectively, of a first and second connection region of the support structure. The flange has a plurality of holes 32 formed though it, the holes 32 being parallel to the axis A and spaced regularly about the flange 30. These holes 32 act as securing formations, each for receiving a fastener, as will be described below.

Each connection region further includes a reinforcement member. The reinforcement member in this embodiment is an annular metal ring 42 that lies in contact with the flange 30. The ring 42 has a mean diameter substantially the same as that of the flange 30 and has through holes 44 that align with the holes 32 in the flange 30.

The first connection region serves to anchor the support structure 12 to a foundation, in this case, a concrete base 46. To this end, the first connection region comprises an anchor plate 50 that is secured within the base 46. The anchor plate 50 has a plurality of tapped holes 52 that are positioned to correspond with the holes in the flange 30 and the ring 42. The support structure 12 is connected to the anchor plate 50 by bolts 54 that pass through the holes 44 in the ring 42 and the holes 32 in the flange 30 to be threaded into the tapped holes 52 in the anchor plate 50. A tubular spacer (not shown) may be provided surrounding the bolt to limit the extent to which the bolts 54 can be driven into the concrete base 46. The length of the spacer can be selected such that the flange 30 is securely fastened but the material of the flange cannot be compressed excessively. The spacer may be implemented as part of the ring 42, within the flange 30 or as separate components.

Alternatively, the ring can be omitted, and each bolt may be surrounded by a spacer 60 component as shown in Fig 11. The spacer component comprises a metal tube that passes through the holes 44 in the flange 39. Secured to (or separate from) an upper end of the tube is a washer. The shaft of the bolt 54 passes through the tube into the base 46. The head of the bolt bears against the washer to clamp the flange to the base 46. The length of the tube may be substantially equal to the thickness of the flange 30, or it may be shorter to apply a clamping force to the flange while preventing excessive distortion of the flange.

The second connection region is similarly constructed, except that the anchor plate 50' is, in this case, moulded within the ride body 10. The ride body 10 is secured to the support structure 12 by bolts 54' that pass through the corresponding ring 42' and flange 30'.

When a child sits on the seat portion 14, his or her weight causes the elastomeric body 20 of the support structure 12 to compress resiliently, the trunk portion 24 acting as a springy compressive strut, allowing the child to bounce up and down. When the child rocks side-to-side, or forwards and backwards, the trunk portion 24 flexes resiliently, for example, by up to as much as 125 mm, always tending to restore itself to a straight configuration. Therefore, from the point of view of the child, the support structure has much the same properties as a metal spring. However, the external appearance of the support structure 12 is almost smooth, and has no formation or structure that might actually present a risk or even give the impression of presenting a risk to a child.

As an enhancement to this embodiment, it is possible to cover the elastomeric body with a protective cover. One particularly advantageous type of cover is formed of a metal mesh, having an appearance much like chain mail. This can provide a very strong cover that is resistant to damage and malicious attack, yet which is sufficiently flexible to accommodate movement of the elastomeric body 20.

In further embodiments of the invention, the use of polyurethane can be extended to the ride body 10.

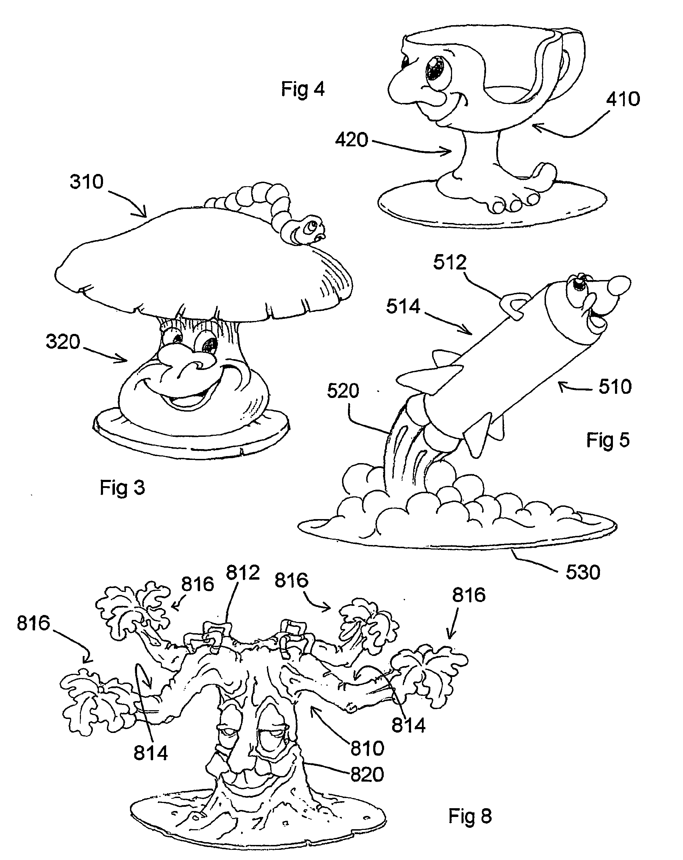

In the embodiments of Figures 3 and 4, the rides are formed, respectively, to resemble an anthropomorphised toadstool and drinking cup. The ride bodies 310, 410 are constituted by portions formed to resemble a toadstool cap and a teacup. In each case, the ride body is supported on an elastomeric body 320, 420 that operates and is constructed in accordance with the principled described above, but which has an outer surface decorated to provide an appearance that fits in with the design of the ride as a whole. So, in the case of the embodiment of Figure 3, the elastomeric body 320 is naturally formed to resemble a toadstool stem. In the embodiment of Figure 4, as will be seen, the shape of the elastomeric body 410 is more fanciful.

Both of these embodiments can conveniently be formed from a single moulding of polyurethane to make up both the ride body and the elastomeric body. In the region of the ride body 310, 410, the polyurethane may be integrally skin foamed or solid, as required.

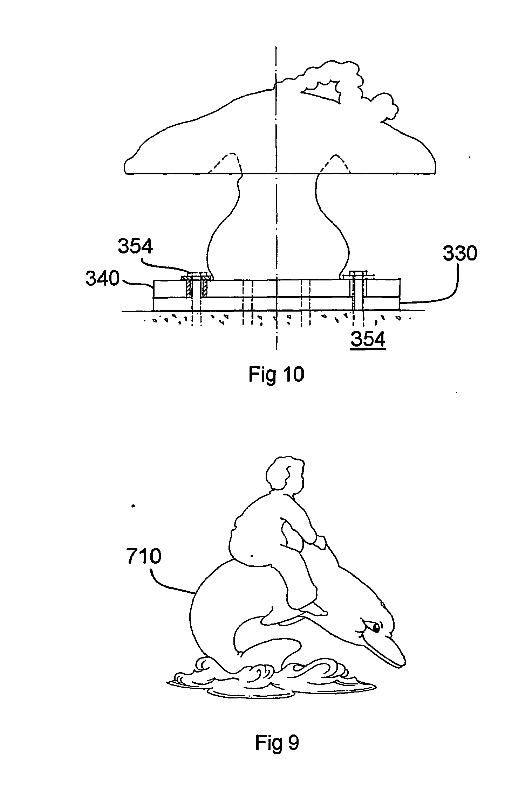

As can be seen in cross-section in Figure 10, the ride body 310 is secured to a foundation, such as a concrete base 346, at a flange portion 330 by a metal ring 344 and bolts 354.

The embodiment of Figure 5 also has a ride body 510 and an elastomeric body. In this case, the ride body 510 is shaped to resemble an anthropomorphised rocket, with the elastomeric body being constituted by a portion that represents the rocket's exhaust. The ride body 10 is formed with an elongate cylindrical portion that has an axis at approximately 45° to the horizontal. The elastomeric body 520 connects a lower end portion of cylindrical portion to a base flange 530 secured to a support surface, such as the ground. Between the base flange 530 and the ride body 510, the elastomeric body has a curved section that acts in flexion as a spring, whereby the ride body can move in a vertical plane, above and below its natural 45° position and side-to-side as the rider shifts his or her body weight.

A metal loop 512 is moulded into the ride body 510 to form a loop that projects from the cylindrical portion. The metal loop 512 is covered by foamed polyurethane during the moulding process. A seat position 514 is defined upon the cylindrical portion of the ride body 510 to provide a safe and comfortable grip. A child sitting upon the seat portion can cause the ride body 510 to bounce in a vertical plane as permitted by flexure of the resilient body.

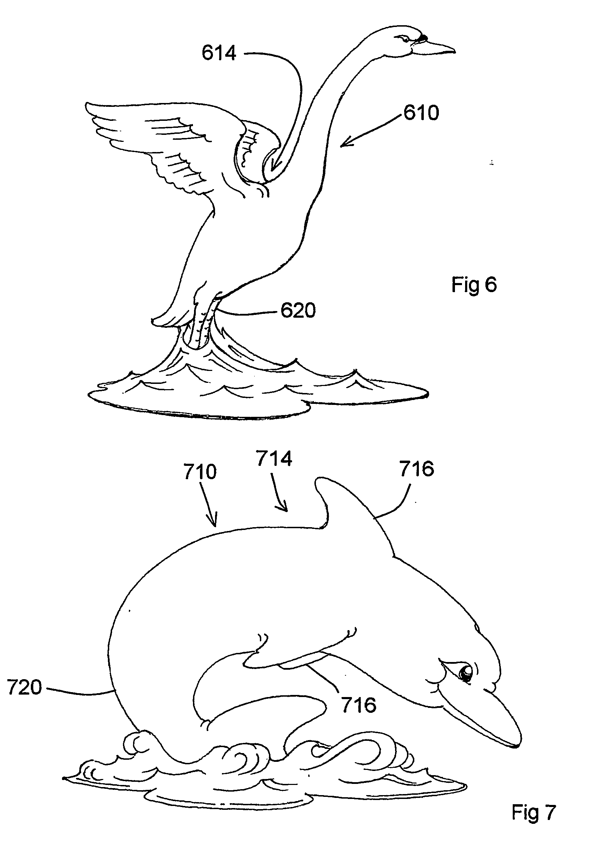

The embodiments of Figures 6 and 7 are constructed upon principles similar to those of Figure 5 in that the elastomeric body operates primarily in flexion. In the embodiment of Figure 6, the ride body 610 is shaped to resemble a swan and the elastomeric body 620 is shaped to resemble the swan's legs. A seat portion 614 is formed by the swan's wings. The portion of the body the corresponds to the swan's wing may be elastomeric or substantially rigid. In Figure 7, the ride body 710 is shaped as the body of a dolphin, and the elastomeric body 710 is its tail. Fins 716 of the dolphin serve as a grip and footrests around a seat portion 714 on the dolphin's back. Both of these embodiments are formed with the elastomeric body and the ride body as polyurethane mouldings, optionally being integrally foamed in regions of the body portion. Components may be moulded separately. For example, in the embodiment of Figure 6, the swan's wings may be separate mouldings, and in Figure 7, the dolphin's fins may be separate mouldings. These components can be co-moulded with the polyurethane or be of another plastic material. The rigidity of components such as the wings and fins in the above embodiment can be selected for a particular effect. They may be rigid to provide a firm grip, or may be flexible to add to the challenge of the ride. The embodiment of Figure 7 is shown in use in Figure 9.

The embodiment of Figure 8 provides a ride that can be used by several children at once. In this embodiment, the ride body 810 comprises a core with four radially projecting arms 816, shaped to resemble the branches of a tree. Each of the arms 816 carries a polyurethane covered metal loop 812 to serve as a grip. A seat portion 814 is formed on each arm so that four children can be carried on the ride body 810. The elastomeric body 820 is formed by the generally vertical trunk of the tree. Therefore, the children can cause the ride body 810 to rock from side to side, causing the elastomeric body 820 to flex along its length.

In each case, the cross-sectional area of the elastomeric body varies along its length, having a greater area close to the ride body and to the portion at which it is connected to the ground, and an intermediate region of lesser cross-section. This allows a designer to select the amount of flexibility and the effective spring rate of the elastomeric body. It has been found that it is not essential to make the outer surface of the elastomeric body smooth in order to achieve the desired spring characteristics. Several different colours of material can be moulded together or other aesthetic elements such as metallic glitter can be added to the mould to enhance the appearance of the ride. Therefore, it is possible to incorporate decoration and components of the aesthetic design of the ride into the outer surface of the elastomeric body as part of the moulding process.

Embodiments of the invention can be applied to replace a steel spring in many examples of "rock-and-ride" or "see-saw" rides, in a ride specifically designed for use with the invention, or to substitute a steel spring in an existing ride.

## Claims

1. A resilient elastomeric support structure for use in an ammusement ride comprising an elastomeric body (20), in which the elastomeric body includes a first connection formation (30) for connection with a supporting foundation, a second connection formation (30') for connection with a ride body (10), and a connection region (24) interconnecting the first and second connection formations (30, 30'), the elastomeric structure being formed of polyurethane **characterised in that** the connecting formations includes holes (32), through each of which a fastener (54), such as a bolt, can be passed, whereby the connecting formations are disposed such that material of the elastomeric body in use, is held substantially in compression.

2. A resilient elastomeric support structure according to claim 1 in which the elastomeric body is formed as a one-piece moulding.

3. A resilient elastomeric support structure according to claim 1 or claim 2 in which the connection formation includes a securing region.

4. A resilient elastomeric support structure according to claim 3 in which the securing region includes a flange formed in the elastomeric body.

5. A resilient elastomeric support structure according to claim 3 or claim 4 in which the securing region includes one or more securing formations that can interact with fasteners to secure the elastomeric structure to a supporting foundation or to a ride body, as the case may be.

6. A resilient elastomeric support structure according to any preceding claim in which the elastomeric structure includes a respective reinforcement member provided as part of each connection formation.

7. A resilient elastomeric support structure according to claim 6 in which a reinforcement member includes an annular element, typically of metal, that lies on or adjacent to a flange that is formed integrally with the elastomeric body, and which, in use, can hold the flange in compression.

8. A resilient elastomeric support structure according to any preceding claim in which the elastomeric body is covered with a defensive cover of chain mail.

9. An amusement ride comprising a ride body and one or more elastomeric structures, each in accordance with any preceding claim, upon which the ride body can be supported.

10. An amusement ride according to claim 9 that has a ride body that is supported on a single support structure such that it can rock laterally and/or bounce vertically.

11. An amusement ride according claim 10 that is supported upon two spaced supporting members.

12. An amusement ride according to any one of claims 9 to 11 that is configured such that a rider or riders can sit upon the ride body.

13. An amusement ride according to any one of claims 9 to 12 in which the ride body and the elastomeric body are formed as a single moulding of polyurethane.

14. An amusement ride according to any one of claims 9 to 13 in which regions of the ride body with which a rider may make direct contact are integrally skin foamed.

15. An amusement ride according to any one of claims 9 to 14 having additional components formed as additional mouldings.

16. An amusement ride according to claim 15 in which the additional components are co-moulded with the polyurethane moulding of the ride body to cover the additional components.

17. An amusement ride according to claim 15 or claim 16 in which the polyurethane in the region of the additional components is integrally skin foamed.

18. An amusement ride according to any one of claims 9 to 17 in which ride body is shaped include representations of animals, birds, plants, machinery such as cars or rockets

19. An amusement ride according to claim 18 in which the design of the ride body is anthropomorphised by the addition of features that resemble facial features.

## Patentansprüche

1. Eine federnde elastomere Tragstruktur zur Verwendung in einem Fahrgeschäft, umfassend einen elastomeren Grundkörper (20), wobei der elastomere Grundkörper eine erste Verbindungsformation (30) zur Verbindung mit einer tragenden Unterlage, eine zweite Verbindungsformation (30') zur Verbindung mit einem Fahrkörper (10) und einen Verbindungsbereich (24) enthält, der die ersten und zweiten Verbindungsformationen (30, 30') miteinander verbindet, wobei die elastomere Struktur aus Polyurethan gebildet wird, **dadurch gekennzeichnet, dass** die Verbindungsformationen Löcher (32) enthalten, durch die jeweils ein Befestigungsmittel (54) wie zum Beispiel eine Durchsteckschraube hindurch geführt werden kann, wodurch die Verbindungsformationen so angeordnet sind, dass das Material des elastomeren Grundkörpers während der Benutzung im Wesentlichen unter Kompression gehalten wird.

2. Federnde elastomere Tragstruktur gemäß Anspruch 1, wobei der elastomere Grundkörper als Pressteil in einem Stück gebildet wird.

3. Federnde elastomere Tragstruktur gemäß Anspruch 1 oder Anspruch 2, wobei die Verbindungsformation einen Befestigungsabschnitt enthält.

4. Federnde elastomere Tragstruktur gemäß Anspruch 3, wobei der Befestigungsabschnitt einen Flansch enthält, der in dem elastomeren Grundkörper ausgebildet ist.

5. Federnde elastomere Tragstruktur gemäß Anspruch 3 oder Anspruch 4, wobei der Befestigungsabschnitt eine oder mehrere Befestigungsformationen enthält, die mit Befestigungsmitteln in Wechselwirkung treten können, um die elastomere Struktur je nachdem an einer tragenden Unterlage oder an einem Fahrkörper zu befestigen.

6. Federnde elastomere Tragstruktur gemäß einem der vorherigen Ansprüche, wobei die elastomere Struktur ein jeweiliges Verstärkungselement enthält, das als Bestandteil jeder Verbindungsformation vorhanden ist.

7. Federnde elastomere Tragstruktur gemäß Anspruch 6, wobei ein Verstärkungselement ein ringförmiges Element enthält, das üblicherweise aus Metall besteht, welches auf einem oder angrenzend an einen Flansch liegt, der als integraler Bestandteil des elastomeren Grundkörpers ausgebildet ist, und das während der Benutzung den Flansch unter Kompression halten kann.

8. Federnde elastomere Tragstruktur gemäß einem der vorherigen Ansprüche, wobei der elastomere Grundkörper mit einer Schutzschicht aus Kettenpanzermaterial bedeckt ist.

9. Fahrgeschäft, umfassend einen Fahrkörper und eine oder mehrere elastomere Strukturen, jeweils gemäß einem der vorherigen Ansprüche, auf dem der Fahrkörper befestigt werden kann.

10. Fahrgeschäft gemäß Anspruch 9, das über einen Fahrkörper verfügt, der auf einer einzelnen Tragstruktur befestigt ist, so dass dieser seitlich schaukeln und/oder vertikal federn kann.

11. Fahrgeschäft gemäß Anspruch 10, das auf zwei beabstandeten Tragelementen befestigt ist.

12. Fahrgeschäft gemäß einem der Ansprüche 9 bis 11, das so konfiguriert ist, dass ein oder mehrere Fahrer auf dem Fahrkörper sitzen können.

13. Fahrgeschäft gemäß einem der Ansprüche 9 bis 12, wobei der Fahrkörper und der elastomere Grundkörper als ein einzelnes Pressteil aus Polyurethan gebildet werden.

14. Fahrgeschäft gemäß einem der Ansprüche 9 bis 13, wobei Abschnitte des Fahrkörpers, mit denen ein Fahrer in direkten Kontakt kommen kann, mit Integralschaumstoff bedeckt werden.

15. Fahrgeschäft gemäß einem der Ansprüche 9 bis 14, das zusätzliche Komponenten aufweist, die als zusätzliche Pressteile gebildet werden.

16. Fahrgeschäft gemäß Anspruch 15, wobei die zusätzlichen Komponenten zusammen mit dem Polyurethan-Pressteil des Fahrkörpers formgepresst werden, um die zusätzlichen Komponenten abzudecken.

17. Fahrgeschäft gemäß Anspruch 15 oder Anspruch 16, wobei das Polyurethan im Bereich der zusätzlichen Komponenten mit Integralschaumstoff bedeckt wird.

18. Fahrgeschäft gemäß einem der Ansprüche 9 bis 17, wobei der Fahrkörper eine Form aufweist, die Darstellungen von Tieren, Vögeln, Pflanzen oder Maschinen wie z. B. Autos oder Raketen einschließt.

19. Fahrgeschäft gemäß Anspruch 18, wobei die Gestalt des Fahrkörpers durch die Hinzufügung von Merkmalen, die an Gesichtsmerkmale erinnern, vermenschlicht wird.

## Revendications

1. Structure de support élastomère élastique destinée à une utilisation sur un manège de loisir munie d'un corps élastomère (20) où le corps élastomère comprend une première formation de raccord (30) destinée à un raccordement avec un socle de support, une deuxième formation de raccord (30') destinée à un raccordement avec un corps de manège (10), et une zone de raccordement (24) interconnectant les première et deuxième formations de raccord (30, 30'), la structure élastomère étant formée de polyuréthanne, **caractérisée en ce que** les formations de raccord comprennent des trous (32), par chacun desquels une pièce de fixation (54), tel qu'un boulon, peut être passée, grâce à quoi les formations de raccord sont disposées de sorte que le matériau du corps élastomère, en utilisation, est maintenu sensiblement en compression.

2. Structure de support élastomère élastique selon la revendication 1 où le corps élastomère est formé sous la forme d'une pièce moulée monobloc.

3. Structure de support élastomère élastique selon la revendication 1 ou 2 où la formation de raccord comprend une zone de fixation.

4. Structure de support élastomère élastique selon la revendication 3 où la zone de fixation comprend un collet formé dans le corps élastomère.

5. Structure de support élastomère élastique selon la revendication 3 ou 4 où la zone de fixation comprend une ou plusieurs formations de fixation qui peuvent interagir avec des pièces de fixation de façon à fixer la structure élastomère à un socle de support ou à un corps de manège, selon le cas.

6. Structure de support élastomère élastique selon l'une quelconque des revendications précédentes où la structure élastomère comprend un élément de renfort respectif fourni en tant que partie de chaque formation de raccord.

7. Structure de support élastomère élastique selon la revendication 6 où un élément de renfort comprend un élément annulaire, typiquement métallique, qui se situe sur ou est adjacent à un collet qui est formé intégralement avec le corps élastomère, et qui, en utilisation, peut maintenir le collet en compression.

8. Structure de support élastomère élastique selon l'une quelconque des revendications précédentes où le corps élastomère est recouvert d'un revêtement protecteur en cotte de mailles.

9. Manège de loisir muni d'un corps de manège et d'une ou plusieurs structures élastomères, chacun d'eux selon l'une quelconque des revendications précédentes, sur lesquels le corps de manège peut être installé.

10. Manège de loisir selon la revendication 9 qui possède un corps de manège qui est installé sur une structure de support unique de sorte qu'il puisse se balancer latéralement et/ou rebondir verticalement.

11. Manège de loisir selon la revendication 10 qui est installé sur deux éléments de support espacés.

12. Manège de loisir selon l'une quelconque des revendications 9 à 11 qui est configuré de sorte qu'un ou des utilisateurs puissent s'asseoir sur le corps de manège.

13. Manège de loisir selon l'une quelconque des revendications 9 à 12 où le corps de manège et le corps élastomère sont formés sous la forme d'un moulage de polyuréthanne unique.

14. Manège de loisir selon l'une quelconque des revendications 9 à 13 où des zones du corps de manège avec lesquelles un utilisateur entre en contact direct peuvent être intégralement recouvertes d'une mousse à pellicule.

15. Manège de loisir selon l'une quelconque des revendications 9 à 14 possédant des composants additionnels formés sous la forme de moulages additionnels.

16. Manège de loisir selon la revendication 15 où les composants additionnels sont co-moulés avec le moulage de polyuréthanne du corps de manège de façon à recouvrir les composants additionnels.

17. Manège de loisir selon la revendication 15 ou 16 où le polyuréthanne dans la zone des composants additionnels est intégralement recouvert d'une mousse à pellicule.

18. Manège de loisir selon l'une quelconque des revendications 9 à 17 où le corps de manège est façonné de façon à inclure des représentations d'animaux, d'oiseaux, de plantes, d'engins tels que des voitures ou fusées.

19. Manège de loisir selon la revendication 18 où l'aspect du corps de manège est anthropomorphisé par l'ajout de caractéristiques qui ressemblent à des caractéristiques faciales.
